# EUROPÄISCHE PATENTANMELDUNG

(11) **EP 1 816 079 A2**
(43) Veröffentlichungstag der Anmeldung: **08.08.2007**
(21) Anmeldenummer: 07001942.7
(22) Anmeldetag: 30.01.2007
(51) Int. Cl.: B65D 1/34, C08J 9/00, C08J 9/14

(54) **Thermoplastischer Schaum und Verpackungsschale aus thermoplastischem Schaum**

(30) Priorität: 03.02.2006 DE 102006004896
(71) Anmelder: Depron B.V., 6002 SM Weert (NL)
(72) Erfinder: Derks, Rene, 5951 EK Belfeld (NL)
(74) Vertreter: Zounek, Nikolai

(57) **Zusammenfassung**

Ein thermoplastischer Schaum besteht aus einer Mischung aus wärmestabilem styrenischem Copolymer, sprödigkeitsabsenkendem styrenischem Copolymer, einem Treibmittel und einem Nukleierungsmittel. Aus dem thermoplastischem Schaum ist unter Vakuum oder Druckluft eine Verpackungsschale für Lebensmittel thermogeformt. Zusätzlich kann der thermoplastische Schaum ein- oder beidseitig mit einer mehrlagigen Folie laminiert oder einseitig mit solch einer mehrlagigen Folie koextrudiert sein.

## Beschreibung

Die Erfindung betrifft einen thermoplastischen Schaum und eine Verpackungsschale aus thermoplastischem Schaum.

Tiefgekühlte und vorgefertigte Nahrungsmittel sowie Fertiggerichte werden im Allgemeinen zusammen mit ihren Verpackungsschalen in einem Mikrowellengerät durch Erwärmung aufgetaut und erhitzt. Dabei müssen die Verpackungsschalen form- und wärmestabil bis zu Temperaturen von etwa 120 °C sein.

Bekannte Verpackungsschalen sind aus homogenen Folien, z.B. aus Polypropylen, Polyester und ähnlichen Polymeren hergestellt und können mit Folien ein- oder beidseitig laminiert, aber auch nicht laminiert sein. Solche Schalen haben eine vom Kunststoff abhängige, bestimmte Form- und Wärmestabilität und beginnen bei über die Stabilitätstemperatur hinaus gehenden Temperaturen weich zu werden und die Form zu verlieren.

Aus der DE 44 45 140 A1 ist ein schaumförmiges Styrolpolymerisat aus einem durch Extrusion aufgeschäumten und gegebenenfalls weiterverarbeiteten Styrolhomo- oder copolymeren und einem Treibmittel bekannt, das im wesentlichen aus Kohlendioxid besteht, enthaltend ein schlagzäh modifiziertes Polystyrol. Das schlagzähe Polystyrol enthält, bezogen auf den gesamten Polymeranteil, 0,5 bis 20 Gew.-% eines teilchenförmigen Kautschuks, der eine mittlere Teilchengröße im Bereich von etwa 0,3 bis 20 µm hat. Die Wärmeformbeständigkeit der schlagzähen Polystyrole ist durch die VICAT-Temperatur von 89 °C begrenzt. Dies bedeutet, dass die aus dem schaumförmigen Styrolpolymerisat hergestellten Produkte eine Wärmeformbeständigkeit von weniger als 89 °C haben.

Die DE 100 05 873 A1 betrifft offenzellige extrudierte Schaumstoffplatten mit einer Offenzelligkeit von mehr als 80 % auf Basis von Styrolpolymerisaten, die 10 bis 50 Gew.-% Polymethylmethacrylat zugemischt enthalten. Die Schaumstoffplatten enthalten ein Styrolpolymerisat, Komponente A, ein Polymethylmethacrylat, Komponente B und gegebenenfalls zur Erhöhung der Wärmeformbeständigkeit eine weitere Komponente C, das ist ein Thermoplast mit einer Glastemperatur von höher als 180 °C. Die Styrolpolymerisate als solche haben VICAT-Temperaturen von 101 °C bzw. 100 °C, insofern sind die Schaumstoff-platten, die aus den Komponenten A und B allein bestehen, nur bis Temperaturen kleiner 100 °C wärme- und formstabil. Wird eine höhere Wärmeformbeständigkeit angestrebt, so bestehen die Schaumstoffplatten aus drei Komponenten.

Die DE 43 18 743 A1 betrifft mit Flammschutzmittel und Nukleierungsmittel ausgerüstete Polystyrolschmelzen, die durch Zusatz von Alkanen wie Propan, Butan oder Propan-/Butanmischung als Treibmittel verschäumt sind. Die Flammhemmung der Polystyrolschäume wird nach sehr kurzer Lagerungszeit oder spätestens nach drei Wochen Lagerung bei Raumtemperatur erreicht. Die Polystyrolschmelze wird dabei aus einem Polystyrol-Copolymerisat und einem Styrol-Butadien-Copolymer oder Polymeren des Styrols erschmolzen. Des weiteren kann sie aus Styrol-Maleinsäureanhydrid-Copolymer und Acryl-Butadien-Styrol oder Polyphenylenoxid erschmolzen werden. Aussagen zur Wärmeformbeständigkeit und der Zellstruktur der aus dem Schaum hergestellten Formkörper werden nicht gemacht.

Aufgabe der Erfindung ist es einen thermoplastischen Schaum geeigneter Zusammensetzung bereit zu stellen, aus dem Verpackungsschalen höherer Wärmeformstabilität und geringer Sprödigkeit geformt werden können, die Mikrowellen tauglich sind und in denen Produkte erhitzt werden können, ohne dass die Verpackungschalen weich werden. Im Rahmen der Aufgabe sollen die Verpackungsschalen in ihrer Zusammensetzung so gestaltet werden, dass das verpackte Lebensmittel erhitzt, aber die Verpackungsschalen selbst an der Außenseite deutlich weniger erwärmt werden.

Diese Aufgabe wird erfindungsgemäß durch einen thermoplastischen Schaum gelöst, der eine Mischung aus einem
(a) wärmestabilen styrenischen Copolymer, ausgewählt aus der Gruppe (i) statistische Styrolcopolymere, (ii) Styrol-Acrylnitril-Coplymere, (iii) Acrylnitril-Butadien-Styrol-Polymere, (iv) Styrol-Butadien-Copolymere, (v) Polyphenylenoxide und (vi) deren Mischungen,
(b) einem styrenischen Copolymer zur Absenkung der Sprödigkeit des thermoplastischen Schaums, ausgewählt aus einer der Gruppen (ii) bis (iv) in (a),
(c) einem Treibmittel aus der Gruppe der Alkane und deren Mischungen, der Gruppe Halogenkohlenwasserstoffe HKW und deren Mischungen, Mischungen aus jeweils zumindest einem HKW und einem Alkan, CO₂ sowie Mischungen von CO₂ mit einem oder mehreren Mitgliedern der Gruppen Alkane und/oder HKW,
(d) einem Nukleierungsmittel aus der Gruppe Talkum, Zitronensäure, Natriumbicarbonat, Natriumcarbonat,
(e) wobei die Mischung im verarbeiteten Zustand form- und wärmestabil für Temperaturen von 115 bis 120 °C ist, und
(f) im verarbeiteten Zustand eine geschlossen- und offenzellige, weitgehend geschlossen-oder weitgehend offenzellige Zellstruktur besitzt.

Mit der Abkürzung HKW sind Halogenkohlenwasserstoffe bezeichnet. Mit dieser Sammelbezeichnung sind Kohlenwasserstoffe gemeint, bei denen H-Atome durch Halogene ersetzt sind. Man spricht dann auch von halogenierten Kohlenwasserstoffen.

In Ausgestaltung der Erfindung beträgt der Anteil des wärmestabilen styrenischen Copolymers aus (a) 10 bis 100 Gew.-% und der Anteil des die Sprödigkeit absenkenden styrenischen Copolymers aus (b) 0 bis 90 Gew.-% an der Mischung aus (a) und (b). Bevorzugt ist das wärmestabile styrenische Copolymer ein statistisches Styrolcopolymer mit 3 bis 30 Gew.-% Maleinsäureanhydrid und 70 bis 97 Gew.-% polymerisiertem Styrol. Die statistischen Styrolcopolymere können durch geeignete Verfahren hergestellt werden, beispielsweise durch Löswgspolymerisation direkt aus den jeweiligen Monomeren durch Zugabe des stärker aktiven Monomeren oder durch Suspensionspolymerisationsverfahren. Das Maleinsäureanhydrid in dem styrenischen Copolymer sorgt für die hohe Wärmestabilität des Polymers. Durch Erhöhung der Konzentration des Maleinsäureanhydrids kann die Wärmestabilität verstärkt werden, d.h. zu höheren Temperaturen hin verschoben werden.

In weiterer Ausgestaltung enthält der thermoplastische Schaum ein styrenisches Copolymer zur Absenkung der Sprödigkeit in der Mischung aus (a) und (b), bei dem es sich um ein Styrol-Butadien-Copolymer handelt. Ein derartiges Styrolcopolymer weist eine modifizierte Schlagzähigkeit auf und kann durch das Einbringen des Elastomeren in das Monomergemisch vor der Polymerisation hergestellt werden. Das Elastomer oder ein Teil des Elastomers kann in das statistische Styrolcopolymer auch nach der Synthese eingemischt werden. Geeignete auf dem Markt erhältliche statistische Styrolcopolymere umfassen die unter der Marke "Dylark" vertriebenen Styrol-Maleinsäureanhydrid-Harze der Nova Chemicals (International) SA. Weitere geeignete im Handel erhältliche statistische Styrolcopolymere sind die von Monsanto hergestellten "CADON"-Harze und die von DSM produzierten "STAPRON"-Harze.

Geeignete wärmestabile styrenische Copolymere sind die Harze "Dylark 332 und 232" und "Dylark FG 7300", bei denen es sich um transparente statistische Styrolcopolymere handelt. Diese Harze sind nicht mit einem Elastomer modifiziert und daher sehr steif und spröde. Zum Absenken der Sprödigkeit wird ein styrenisches Copolymer zugesetzt, das wie zuvor erwähnt, mit einem Elastomer modifiziert ist. Geeignete modifizierte Polymere sind das "Dylark FG 2500"-Harz und das styrenische Polymer "K-resin" SBC der Chevron Phillips Chemical Co. Bei diesen beiden Harzen handelt es sich um ein mit einem Elastomer modifizierten Styrol-Maleinsäureanhydrid und ein Styrol-Butadien-Copolymer, welche die Sprödigkeit der nicht modifizierten styrenischen Copolymere absenken. Dabei ist zu beachten, dass durch den Zusatz der modifizierten Polymere die Wärmestabilität und auch die Steifigkeit in einem gewissen Umfang verringert werden.

In vorteilhafter Weise umfasst die Mischung 6 bis 96 Gew.-% wärmestabiles styrenisches Copolymer, 0 bis 90 Gew.-% sprödigkeitsabsenkendes styrenisches Copolymer, 2 bis 4 Gew.-% Treibmittel und 1 bis 3 Gew.-% Nukleierungsmittel. Bevorzugt ist das Nukleierungsmittel Talkum.

Als wärmebeständige Polymere sind auch Acrylnitril-Butadien-Styrol-Polymere geeignet. Weitere geeignete wärmebeständige Polymere sind Styrol-Acrylnitril-Harze, bei denen es sich um Copolymere aus Styrol und Acrylnitril oder analogen Monomeren handelt und Polyphenylenoxide, deren Hauptketten aus über Sauerstoff-Brücken verknüpften Phenylen-Resten aufgebaut sind.

Die in der Mischung für den thermoplastischen Schaum enthaltenen Copolymere können zusätzlich Füllstoffe, Pigmente, Weichmacher, Gleitmacher, Stabilisierungsmittel, Verarbeitungshilfsstoffe enthalten. Ein geeigneter Füllstoff ist beispielsweise Calciumcarbonat, um Verlust an physikalischen oder mechanischen Eigenschaften zu verhindern, wenn die Copolymere bei erhöhten Temperaturen schmelzverarbeitet werden.

In Ausführung der Erfindung wird auch Natriumcarbonat als Nukleierungsmittel eingesetzt.

Im bevorzugter Weise wird ein Blend aus einem statistischen Styrolcopolymer und einem mit einem Elastomer modifizierten Copolymer wie beispielsweise einem Styrol-Maleinsäureanhydrid-Copolymer oder Styrol-Butadien-Copolymer zum Absenken der Sprödigkeit hergestellt und ein Treibmittel hinzugefügt, das beispielsweise eine Gasmischung aus Propan/n-Butan/Isobutan ist, mit 30 bis 65 Gew.-% Propan, 40 bis 50 Gew.-% n-Butan und 15 bis 30 Gew.-% Isobutan. Insbesondere besteht das Treibmittel aus einer Gasmischung 35 Gew.-% Propan, 45 Gew.-% n-Butan und 20 Gew.-% Isobutan. In einer weiteren Ausgestaltung ist n-Butan das Treibmittel. Das bevorzugte Nukleierungsmittel ist, wie schon voranstehend erwähnt, Talkum.

Zur Herstellung des thermoplastischen Schaumes wird eine herkömmliche Extrusionsanlage mit zwei Extrudern mit einer Mischung aus einem wärmestabilen styrenischen Copolymer und einem Elastomer styrenischen Copolymer zur Absenkung der Sprödigkeit des Schaumes, die mit einem Nukleierungsmittel vermischt sind, beschickt, erhitzt und aufgeschmolzen. Die Kunststoffschmelze wird mit einem Treibmittel über einen Injektor mit hohem Druck beaufschlagt. Das Treibmittel wird homogen mit der Kunststoffschmelze vermischt, die in einem zweiten Extruder vor der Extrusion abgekühlt wird. An der Extrusionsdüse tritt eine rasche Verdampfung und ein Aufschäumen des Treibmittels auf und es kommt zu einer Abkühlung des Kunststoffschaumes. Beim Weitertransport kühlt der extrudierte Kunststoffschaum weiter ab.

Der thermoplastische Schaum hat eine Zellstruktur, die offenzellig, geschlossenzellig oder offen- und geschlossenzellig ist, d.h. der Anteil der offenzelligen Struktur an dem Volumen des Schaumes ist in sehr großem Umfang variierbar und reicht von null bis nahezu 100 % des Schaumvolumens. Im Allgemeinen liegt der Anteil der offenzelligen Zellstruktur im Bereich von 10 bis 60 Volumenprozent. Die Angabe von Volumenprozent bezieht sich jeweils auf das Gesamtvolumens einer repräsentativen Volumeneinheit des Schaumes. Der Anteil der offenen und geschlossenen Zellen kann gemäß der ISO Norm 4590, Jahr 2002 bestimmt werden.

Von offenzelliger Zellstruktur ist die Rede, wenn mindestens zwei der den Hohlraum einer Zelle umschließenden Zellwände Öffnungen aufweisen, so dass zwischen benachbarten Zellen ein Stoffaustausch von gasförmigen oder flüssigen Medien stattfinden kann.

Eine geschlossenzellige Zellstruktur liegt vor, wenn die den Hohlraum einer Zelle umschließenden Zellwände keine Öffnungen aufweisen und somit für Medien undurchlässig sind.

Der thermoplastische Schaum hat eine Dichte von 0,06 bis 0,2 g/cm³. Das Treibmittel entweicht langsam aus dem Schaum und es wird eine Expansion bis zu einem Faktor 2 nach der Extrusion erreicht. Der thermoplastische Schaum kann nach der Extrusion auf eine Wickelrolle aufgewickelt, gelagert und zu seinem späteren Zeitpunkt beispielsweise zu einer Verpackungsschale weiter verarbeitet werden. Üblicherweise erfolgt die Weiterverarbeitung unmittelbar im Anschluss an die Extrusion, in dem der thermoplastische Schaum tiefgezogen und zu einem Endprodukt, z.B. einer Verpackungsschale thermogeformt wird.

Für verschiedene Verwendungszwecke, die beispielsweise eine Öl- bzw. Fettbeständigkeit des Schaumes erfordern, d.h. einen hohen Widerstand gegen Öle bzw. Fette, wird der thermoplastische Schaum ein- oder beidseitig mit einer mehrlagigen Folie laminiert. In Ausführung der Erfindung ist dabei eine Schicht des Schaumes ein- oder beidseitig mit einer zumindest dreilagigen Folie aus Polypropylen/Styrol-Butadien-Copolymer/wärmestabilem styrenischem Copolymer und sprödigkeitsabsenkendem styrenischem Copolymer laminiert.

In weiterer Ausgestaltung der Erfindung ist die Schicht des Schaumes ein- oder beidseitig mit einer fünflagigen Folie aus Polypropylen/Styrol-Butadien-Copolymer/EVOH/Styrol-Butadien-Copolymer/wärmestabilem styrenischem Copolymer und sprödigkeitsabsenkendem styrenischem Copolymer laminiert. Die mittige Lage der fünflagigen Folienstruktur ist eine Gasbarriereschicht wie beispielsweise Ethylenvinylalkohol-Copolymer. Dieses EVOH-Copolymer lässt sich zu einer transparenten, hydrophilen, glänzenden und antistatischen Folie verarbeiten, die porenfrei und gut haftend ist. Die nach außen gerichtete Lage der mehrlagigen Folien ist Polypropylen, das eine höhe Öl- bzw. Fettbeständigkeit besitzt und eine Wärmesiegelbarkeit gewährleistet. Die innerste Lage der mehrlagigen Folie besteht aus der Mischung aus wärmestabilem styrenischem Copolymer und sprödigkeitsabsenkendem styrenischem Copolymer, aus dem auch der thermoplastische Schaum aufgebaut ist, so dass eine ausgezeichnete Haftung der Folie auf dem Schaum nach dem Laminieren gegeben ist.

Die mehrlagige Folie selbst wird bevorzugt durch Coextrusion von mehreren Polymerlagen hergestellt, sie kann aber auch durch Laminieren der Lagen gefertigt werden.

Im Folgenden ist unter "einseitig" zu verstehen, dass eine Schicht des thermoplastischen Schaumes nur auf einer Seite mit weiteren Polymerlagen coextrudiert oder laminiert ist. Mit "beidseitig" ist gemeint, dass eine Schaumschicht auf beiden Seiten laminiert ist.

In weiterer Ausgestaltung der Erfindung bildet eine Schicht des Schaumes mit einseitig coextrudierten Lagen aus Polypropylen, Styrol-Butadien-Copolymer, wärmestabilem styrenischem Copolymer und sprödigkeitsabsenkendem styrenischem Copolymer ein Coextrudat. In bevorzugter Weise beträgt der Anteil des wärmestabilen styrenischen Copolymers in der mehrlagigen Folie bzw. in der Polymerschicht 40 bis 90 Gew.-% und der Anteil des sprödigkeitsabsenkendem styrenischem Copolymers 60 bis 10 Gew.-%. In einer anderen Ausführungsform der Erfindung bildet eine Schicht des Schaumes mit einer einseitig coextrudierten Polymerschicht aus Lagen aus Polypropylen, Styrol-Butadien-Copolymer, EVOH, Styrol-Butadien-Copolymer, wärmestabilem styrenischem Copolymer und sprödigkeitsabsenkendem styrenischem Copolymer ein Coextrudat.

In Weitergestaltung der Erfindung wird der ein- oder beidseitig mit einer mehrlagigen Folie laminierte thermoplastische Schaum unter Vakuum tiefgezogen und zu einer Verpackungsschale thermogeformt. Erfindungsgemäß kann der thermoplastische Schaum einseitig mit Lagen aus Polypropylen/Styrol-Butadien-Copolymer/wärmestabilem styrenischem Copolymer und sprödigkeitsabsenkendem styrenischem Copolymer coextrudiert, tiefgezogen und zu einer Verpackungsschale thermogeformt werden. Desgleichen wird aus einem einseitig mit Lagen aus Polypropylen/Styrol-Butadien-Copolyrner/EVOWStyrol-Butadien-Copolymer/-wännestabilem styrenischem Copolymer und sprödigkeitsabsenkendem styrenischem Copolymer coextrudierten thermoplastischen Schaum durch Tiefziehen und Thermoformung ein Verpackungsschale gebildet.

Im Folgenden wird die Erfindung an Hand von Beispielen näher erläutert.

Es wurden zur Herstellung des thermoplastischen Schaumes Mischungen aus dem wärmestabilen styrenischen Copolymer "Dylark 332" und dem elastomerhaltigen styrenischen Copolymer "Dylark FG 2500" einerseits und "Dylark 232" und "Dylark FG 2500" andererseits in einem ersten Extruder aufgeschmolzen. Bei der Mischung aus "Dylark 332" und "Dylark FG 2500" wurde das Nukleierungsmittel Talkum der Mischung im trockenen Zustand vor dem Einfüllen in den ersten Extruder zugesetzt. Als Treibmittel kam n-Butan zum Einsatz, das in den ersten Extruder injiziert wurde. Die Polymerschmelze wurde in einem zweiten Extruder weiter verarbeitet. Das Verhältnis der Gewichtsanteile (in %) von Dylark 332/Dylark FG 2500 wurde von 0/96 bis 73/23 verändert. Der Gewichtsanteil des Nukleierungsmittels Talkum betrug bei den Beispielen 1 bis 9 1 Gew.-% und der Gewichtsanteil des Treibmittels war jeweils 3 Gew.-%. Die Gewichtsprozente beziehen sich jeweils auf das Gesamtgewicht der Mischung einschließlich des Nukleierungs- und Treibmittels. Anstelle von "Dylark 332-80" wurde auch "Dylark FG 7300" als wärmestabiles styrenisches Copolymer in der Mischung für den thermoplastischen Schaum eingesetzt, wobei der Gewichtsanteil von "Dylark FG 7300" gleich groß wie derjenige von "Dylark 332-80" in den Beispielen 1 bis 4 und 8, 9 war.

Die Mischung "Dylark 232" und "Dylark FG 2500" wurde gleichfalls im ersten Extruder aufgeschmolzen. Das Treibmittel n-Butan wurde mit hohem Druck injiziert. Das Nukleierungsmittel war Talkum. Das Verhältnis der Gewichtsanteile (in %) von Dylark 232/Dylark FG 2500 lag im Bereich von 24/72 bis 72/24 in den Beispielen 5 bis 7.

Die Bestandteile der Mischungen sind in der nachfolgenden Tabelle 1 zusammengestellt.

Der extrudierte thermoplastische Schaum hatte geschlossene Zellen und eine Dichte von 0,06 bis 0,2 g/cm³ . Die Wärmeformstabilität des thermoplastischen Schaumes war im Vergleich mit einem Polystyrolschaum gleicher Dichte erhöht. Durch Erhöhung der Extrusionstemperatur wird eine Zellstruktur aus offenen und geschlossenen Zellen im extrudierten Schaum erhalten, insbesondere ist es möglich eine weitgehend offenzellige Struktur zu erhalten.

Die Wärmeformstabilität der Schäume stieg mit höherem Anteil von Dylark 332 in der Mischung an, ebenso die Schaumsprödigkeit. Verpackungsschalen, die aus den thermoplastischen Schäumen der Tabelle 1 thermogeformt wurden, zeigten mit steigendem Anteil an Dylark 332 oder 232 eine höhere Wärmeformstabilität.

Es wurden des Weiteren Mischungen aus "Dylark 332" und "Dylark FG 2500" zu thermoplastischen Schäumen verarbeitet. Die Mischungen enthielten 73 Gew.-% "Dylark 332-80", 23 bis 24 Gew.-% "Dylark FG 2500", 1 Gew.-% Talkum und 3 bis 2 Gew.-% Treibmittel. Das Treibmittel war n-Butan.

Der extrudierte Schaum hat eine Dichte von 0,104 bis 0,126 g/cm³, eine Dicke von 2,3 bis 1,9 mm und seine Zellen waren weitgehend geschlossen.

Die Daten dieses Schaumes sind in Tabelle 2 zusammengefasst.

In den Beispielen 10 und 11 der Tabelle 3 sind thermoplastische Schäume aus "Dylark FG 7300" und "Dylark FG 2500" zusammengestellt. Die Mischungen enthielten 71 und 69 Gew.-% "Dylark FG 7300", 24 Gew.-% "Dylark FG 2500", 2 Gew.-Talkum, 3 Gew.-% n-Butan als Treibmittel und im Beispiel 11 noch 2 Gew.-% eines Farb-Masterbatches.

Die extrudierten thermoplastischen Schäume werden entweder unmittelbar nach der Extrusion unter Vakuum oder mittels Druckluft zu Verpackungsschalen thermogeformt oder mehrere Tage gelagert, bevor sie weiterverarbeitet werden.

Während der Lagerung diffundiert das Treibmittel langsam aus der Zellstruktur heraus und es kommt zu einer Nachexpansion der Schäume.

Die Wärmebeständigkeit der aus dem extrudierten thermoplastischen Schaum gefertigten Produkte hängt von den VICAT-Temperaturen der Komponenten des Schaumes ab. Das "DylarkFG 2500" Harz hat eine VICAT-Temperatur von 123 °C und die "Dylark 232 und 332"-harze haben VICAT-Temperaturen von 122 °C und 135 °C. Die aus den Mischungen dieser harze gefertigten Verpackungsschalen haben eine Wärmeformbeständigkeit von 115 bis 120 °C, die geringfügig niedriger als die VICAT-Temperaturen der Harze ist, aber um etwa 26 bis 31 °C höher als diejenige der aus der DE 44 45 140 A1 bekannten Schalen ist.

Nach Beendigung der Lagerung können die Schäume mit einer dreilagigen Folie aus Polypropylen/Styrol-Butandien-Copolymer/wärmestabilem styrenischem Copolymer plus sprödigkeitsabsenkendem styrenischem Copolymer unter Druck und Wärmeanwendung laminiert werden. Die mittlere Folienlage aus Styrol-Butadien-Copolymer ist dabei eine Folie des K-resins SBC DK13 und die innere Folienlage, die in Kontakt mit dem Schaum ist, besteht aus Dylark 332 mit 80 Gew.-% und K-resin SBC mit 20 Gew.-%, bezogen auf das Gesamtgewicht der inneren Folienlage. Das Laminat wird tiefgezogen und unter Vakuum zu einer Verpackungsschale thermogeformt, wobei es zu einer Nachexpansion kommt, die die ursprüngliche Dicke der extrudierten Schäume bis zu einem Faktor 2 vergrößert. Die äußere Folienlage aus Polypropylen besitzt eine verbesserte Öl- bzw. Fettbeständigkeit im Vergleich mit dem nichtlaminierten thermoplastischen Schaum. Von Vorteil ist des Weiteren, dass durch das Laminieren die Außenseiten der Verpackungsschalen sich beim Erwärmen im Mikrowellenherd deutlich weniger stark erwärmen als die Innenseiten der Schalen, die das zu erwärmende Lebensmittel aufnehmen und dass die äußere Polypropylenschicht wärmesiegelbar ist, so dass die Verpackungsschalen mit herkömmlichen Folien gesiegelt werden können, wie sie beispielsweise zum Siegeln mit homogenen Polypropylen-Verpäckungsschalen zwecks Verlängerung der Haltbarkeit von Lebensmitteln eingesetzt werden. Solche Siegelfolien sind beispielsweise PE-Folien der Firma Cryovac mit der Typenbezeichnung "Cryovac POM 147B", Folien auf Basis Polyethylenterephthalat/Polypropylen und Folien auf Basis druckbehandeltes Polyethylenterephthalat/Polypropylen/EVOH/Polypropylen.

**Tabelle 1**

| **Zusammensetzung [Gew.-%]** | **Beispiel 1** | **Beispiel 2** | **Beispiel 3** | **Beispiel 4** |
|---|---|---|---|---|
| Dylark 332-80 /FG 7300 | 72 | 48,5 | 24 | 0 |
| Dylark FG-2500 | 24 | 48,5 | 72 | 96 |
| Talkum | 1,0 | 1,0 | 1,0 | 1,0 |
| Treibgas (n-butan) | 3,0 | 3,0 | 3,0 | 3,0 |

| **Zusammensetzung [Gew.-%]** | **Beispiel 5** | **Beispiel 6** | **Beispiel 7** | |
|---|---|---|---|---|
| Dylark 232 | 72 | 48,5 | 24 | |
| Dylark FG 2500 | 24 | 48,5 | 72 | |
| Talkum | 1,0 | 1,0 | 1,0 | |
| Treibgas (n-butan) | 3,0 | 3,0 | 3,0 | |

**Tabelle 2**

| **Zusammensetzung [Gew.-%]** | **Beispiel 8** | **Beispiel 9** |
|---|---|---|
| Dylark 332-80/FG 7300 | 73 | 73 |
| Dylark FG 2500 | 23 | 24 |
| Talkum | 1,0 | 1,0 |
| Treibmittel (n-Butan) | 3,0 | 2,0 |

**Tabelle 3**

| **Zusammensetzung [Gew.-%]** | **Beispiel 10** | **Beispiel 11** |
|---|---|---|
| Dylark FG 7300 | 71 | 69 |
| Dylark FG 2500 | 24 | 24 |
| Talkum | 2,0 | 2,0 |
| Farb-Masterbatch | - | 2,0 |
| Treibmittel (n-Butan) | 3,0 | 3,0 |

## Patentansprüche

1. Thermoplastischer Schaum umfassend eine Mischung aus einem
(a) wärmestabilen styrenischen Copolymer, ausgewählt aus der Gruppe (i) statistische Styrolcopolymere, (ii) Styrol-Acrylnitril-Coplymere, (iii) Acrylnitril-Butadien-Styrol-Polymere, (iv) Styrol-Butadien-Copolymere, (v) Polyphenylenoxide und (vi) deren Mischungen,
(b) einem styrenischen Copolymer zur Absenkung der Sprödigkeit des thermoplastischen Schaums, ausgewählt aus einer der Gruppen (ii) bis (iv) in (a),
(c) einem Treibmittel aus der Gruppe der Alkane und deren Mischungen, der Gruppe der Halogenkohlenwasserstoffe HKW und deren Mischungen, Mischungen aus jeweils zumindest einem HKW und einem Alkan, CO₂ sowie Mischungen von CO₂ mit einem oder mehreren der Mitglieder der Gruppen Alkane und/oder HKW,
(d) einem Nukleierungsmittel aus der Gruppe Talkum, Zitronensäure, Natriumbicarbonat, Natriumcarbonat,
(e) wobei die Mischung im verarbeiteten Zustand form- und wärmestabil für Temperaturen von 115 bis 120 °C ist, und
(f) im verarbeiteten Zustand eine geschlossen- und offenzellige, weitgehend geschlossen- oder weitgehend offenzellige Zellstruktur besitzt.

2. Thermoplastischer Schaum nach Anspruch 1, **dadurch gekennzeichnet, dass** der Anteil des wärmestabilen styrenischen Copolymers aus (a) 10 bis 100 Gew.-% und der Anteil des die Sprödigkeit absenkenden styrenischen Copolymers aus (b) 0 bis 90 Gew.-% an der Mischung aus (a) und (b) beträgt.

3. Thermoplastischer Schaum nach Anspruch 1, **dadurch gekennzeichnet, dass** das wärmestabile styrenische Copolymer ein Styrol-Maleinsäureanhydrid Copolymer ist.

4. Thermoplastischer Schaum nach Anspruch 3, **dadurch gekennzeichnet, dass** das wärmestabile styrenische Copolymer ein statistisches Styrolcopolymer mit 3 bis 30 Gew.-% Maleinsäureanhydrid und 70 bis 97 Gew.-% polymerisiertem Styrol ist.

5. Thermoplastischer Schaum nach Anspruch 1, **dadurch gekennzeichnet, dass** das wärmestabile styrenische Copolymer ein Styrol-Butadien-Copolymer zur Absenkung der Sprödigkeit der Mischung aus (a) und (b) ist.

6. Thermoplastischer Schaum nach Anspruch 1, **dadurch gekennzeichnet, dass** die Mischung 6 bis 96 Gew.-% wärmestabiles styrenisches Copolymer, 0 bis 90 Gew.-% sprödigkeitsabsenkendes styrenisches Copolymer, 2 bis 4 Gew.-% Treibmittel und 1 bis 3 Gew.-% Nukleierungsmittel umfasst.

7. Thermoplastischer Schaum nach Anspruch 1, **dadurch gekennzeichnet, dass** die Gruppe der Alkane Butan, Propan, Pentan und deren Mischungen umfasst.

8. Thermoplastischer Schaum nach Anspruch 1, **dadurch gekennzeichnet, dass** das Treibmittel eine Gasmischung aus Propan/n-Butan/Isobutan ist, mit 30 bis 35 Gew.-% Propan, 40 bis 50 Gew.-% n-Butan und 15 bis 30 Gew.-% Isobutan ist.

9. Thermoplastischer Schaum nach Anspruch 8, **dadurch gekennzeichnet, dass** das Treibmittel eine Gasmischung aus 35 Gew.-% Propan, 45 Gew.-% n-Butan und 20 Gew.-% Isobutan ist.

10. Thermoplastischer Schaum nach Anspruch 1, **dadurch gekennzeichnet, dass** das Treibmittel n-Butan ist.

11. Thermoplastischer Schaum nach Anspruch 1, **dadurch gekennzeichnet, dass** das Treibmittel aus der Gruppe der Halogenkohlenwasserstoffe aliphatische Halogenkohlenwasserstoffe umfasst, die zusätzlich zu Kohlenstoff und Wasserstoff noch Fluor, Chlor, Brom oder Jod enthalten, insbesondere Trichlorfluormethan und Dichlor-difluormethan.

12. Thermoplastischer Schaum nach Anspruch 1, dass das Treibmittel CO₂ ist.

13. Thermoplastischer Schaum nach Anspruch 1, **dadurch gekennzeichnet, dass** das Nukleierungsmittel Talkum ist.

14. Thermoplastischer Schaum nach Anspruch 1, **dadurch gekennzeichnet, dass** das Nukleierungsmittel Natriumcarbonat ist.

15. Thermoplastischer Schaum nach einem der Ansprüche 1 bis 14, **dadurch gekennzeichnet, dass** eine Schicht des Schaumes ein- oder beidseitig mit einer zumindest 3-lagigen Folie aus Polypropylen/Styrol-Butadien Copolymer/wärmestabilem styrenischem Copolymer und sprödigkeitsabsenkendem styrenischem Copolymer laminiert ist.

16. Thermoplastischer Schaum nach einem der Ansprüche 1 bis 14, **dadurch gekennzeichnet, dass** eine Schicht des Schaumes ein- oder beidseitig mit einer 5-lagigen Folie aus Polypropylen/Styrol-Butadien Copolymer/EVOH/Styrol-Butadien Copolymer/ wärmestabilem styrenischem Copolymer und sprödigkeitsabsenkendem styrenischem Copolymer laminiert ist.

17. Thermoplastischer Schaum nach einem der Ansprüche 1 bis 14, **dadurch gekennzeichnet, dass** eine Schicht des Schaumes einseitig mit Lagen aus Polypropylen, Styrol-Butadien Copolymer, wärmestabilem styrenischem Copolymer und sprödigkeitsabsenkendem styrenischem Copolymer ein Koextrudat bildet.

18. Thermoplastischer Schaum nach einem der Ansprüche 1 bis 14, **dadurch gekennzeichnet, dass** eine Schicht des Schaumes einseitig mit einer Polymerschicht aus Lagen aus Polypropylen, Styrol-Butadien Copolymer, EVOH, Styrol-Butadien Copolymer, wärmestabilem styrenischem Copolymer und sprödigkeitsabsenkendem styrenischem Copolymer ein Koextrudat bildet.

19. Thermoplastischer Schaum nach Anspruch 1, **dadurch gekennzeichnet, dass** das wärmestabile styrenische Copolymer offenzellig ist.

20. Thermoplastischer Schaum nach Anspruch 1, **dadurch gekennzeichnet, dass** das wärmestabile styrenische Copolymer geschlossenzellig ist.

21. Thermoplastischer Schaum nach Anspruch 1, **dadurch gekennzeichnet, dass** das wärmestabile styrenische Copolymer geschlossen- und offenzellig ist.

22. Thermoplastischer Schaum nach einem der Ansprüche 15 bis 18, **dadurch gekennzeichnet, dass** der Schaum auf der Seite, die die Außenseite einer Verpackungsschale nach Tiefziehen und Thermoformung des Schaumes bildet, wärmestabiles styrenisches Copolymer und sprödigkeitsabsenkendes styrenisches Copolymer als Außenlage aufweist.

23. Thermoplastischer Schaum nach einem der Ansprüche 15 bis 18, **dadurch gekennzeichnet, dass** der Anteil des wärmestabilen styrenischen Copolymers in der mehrlagigen Folie bzw. in der Polymerschicht 40 bis 90 Gew.-% und der Anteil des sprödigkeitsabsenkenden styrenischen Copolymers 60 bis 10 Gew.-% beträgt.

24. Verpackungsschale für Nahrungsmittel aus einem thermoplastischen Schaum nach einem der Ansprüche 1 bis 23, der unter Vakuum oder mittels Druckluft zu einer Verpackungsschale thermogeformt ist, die eine Wärmeformbeständigkeit von 115 bis 120 °C aufweist.

25. Verpackungsschale nach Anspruch 24 aus einem ein- oder beidseitig mit einer mehrlagigen Folie laminierten oder einseitig mit einer mehrlagigen Folie koextrudierten thermoplastischen Schaum, der zusammen mit der (den) Folie(n) unter Vakuum oder mittels Druckluft thermogeformt ist.

26. Verpackungsschale nach Anspruch 25, **dadurch gekennzeichnet, dass** der thermoplastische Schaum aus einer offenzelligen und einer geschlossenzelligen Schaumlage besteht.

27. Verpackungsschale nach Anspruch 26, **dadurch gekennzeichnet, dass** das Material der offenzelligen und der geschlossenzelligen Schaumlage Styrol-Maleinsäureanhydrid Copolymer ist.

28. Verpackungsschale nach einem der Ansprüche 24 bis 27, **dadurch gekennzeichnet, dass** der thermoplastische Schaum mit einer 3- bis 5-lagigen Folie ein- oder beidseitig laminiert ist und dass die Laminatstruktur aus thermoplastischem Schaum und Folie(n) tiefgezogen und thermogeformt ist.

29. Verpackungsschale nach Anspruch 28, **dadurch gekennzeichnet, dass** die 3-lagige Folie Polypropylen/Styrol-Butadien Copolymer/wärmestabiles styrenisches Copolymer und sprödigkeitsabsenkendes styrenisches Copolymer umfasst, wobei die Lage aus Polypropylen jeweils die Innenseite(n) der Verpackungsschale bilde(t)n.

30. Verpackungsschale nach Anspruch 28, **dadurch gekennzeichnet, dass** die 5-lagige Folie Polypropylen/Styrol-Butadien Copolymer/EVOH/Styrol-Butadien Copolymer-/wärmestabiles styrenisches Copolymer und sprödigkeitsabsenkendes styrenisches Copolymer umfasst, und die Lage aus Polypropylen jeweils die Innenseite(n) der Verpackungsschale bilde(t)n.

31. Verpackungsschale nach Anspruch 25, tiefgezogen und thermogeformt aus einem einseitig mit Lagen aus Polypropylen/Styrol-Butadien Copolymer/geschlossen- oder offenzelligem wärmestabilem styrenischem Copolymer und sprödigkeitsabsenkendem styrenischem Copolymer/koextrudierten thermoplastischen Schaum.

32. Verpackungsschale nach Anspruch 25, tiefgezogen und thermogeformt aus einem einseitig mit Lagen aus Polypropylen/Styrol-Butadien Copolymer/EVOH/Styrol-Butadien Copolymer/geschlossen- oder offenzelligem wärmestabilem styrenischem Copolymer und sprödigkeitsabsenkendem styrenischem Copolymer/koextrudierten thermoplastischen Schaum.

33. Verpackungsschale nach einem der Ansprüche 24 bis 32, **dadurch gekennzeichnet, dass** der extrudierte thermoplastische Schaum aus geschlossen- und offenzelligem Schaum, geschlossenzelligem oder offenzelligem Schaum besteht.
